# FASCICULE DE BREVET EUROPEEN

(11) **EP 1 037 070 B1**
(45) Date de publication et mention de la délivrance du brevet: **19.05.2004**
(21) Numéro de dépôt: 00400565.8
(22) Date de dépôt: 02.03.2000
(51) Int. Cl.: G01T 1/17

(54) **Procédé et dispositif de tri en temps réel d'événements de détection d'un détecteur de rayonnements gamma**
Verfahren und Vorrichtung zur Klassifizierung von Ereignissen eines Gammastrahlungsdetektors in Echtzeit
Process and apparatus for classifying detection events in a gamma-radiation detector in real-time

(30) Priorité: 05.03.1999 FR 9902774
(43) Date de publication de la demande: 20.09.2000
(73) Titulaire: COMMISSARIAT A L'ENERGIE ATOMIQUE, 75015 Paris Cédex 15 (FR)
(72) Inventeur: Mestais, Corinne, 38660 La Terrasse (FR); Chapuis, Alain, 38950 St. Martin Le Vinoux (FR); Mathy, Françoise, 38240 Meylan (FR); Verger, Loick, 38000 Grenoble (FR)
(74) Mandataire: Weber, Etienne Nicolas

(56) Documents cités:
- EP-A- 0 763 751
- GB-A- 2 214 390
- US-A- 4 400 621
- US-A- 5 821 538

## Description

### Domaine technique

La présente invention concerne un procédé de tri en temps réel de signaux de détection d'un détecteur de rayonnement γ permettant d'effectuer une discrimination entre des signaux correspondant à un rayonnement direct et des signaux correspondant à un rayonnement indirect ou diffusé.

On entend par rayonnements directs, des rayonnements qui, après avoir été émis d'une zone radioactive, interagissent directement avec le détecteur. Les rayonnements indirects, par contre, interagissent une ou plusieurs fois avec un milieu entourant la zone radioactive avant d'interagir avec le détecteur.

L'invention concerne également un dispositif, et en particulier une gamma-caméra mettant en oeuvre le procédé de tri.

Enfin, l'invention concerne un procédé de correction d'uniformité de détection pour une pluralité d'éléments de détection du détecteur.

L'invention trouve des applications notamment dans le domaine de l'imagerie médicale et en médecine , pour la réalisation de gamma-caméra.

### Etat de la technique antérieure

En médecine nucléaire, selon certaines méthodes de diagnostic, on injecte à un patient des radioéléments sous la forme de molécules marquées par un traceur radioactif tel que, par exemple, le technétium, l'iode ou le thallium. Selon le type de molécules utilisées, celles-ci se fixent sélectivement sur certains tissus ou organes.

Une gamma-caméra est ensuite utilisée pour détecter les rayons gamma issus du patient, et pour constituer une image des tissus ou de l'organe concerné. Le contraste de l'image dépend de la fixation des radioéléments par les tissus.

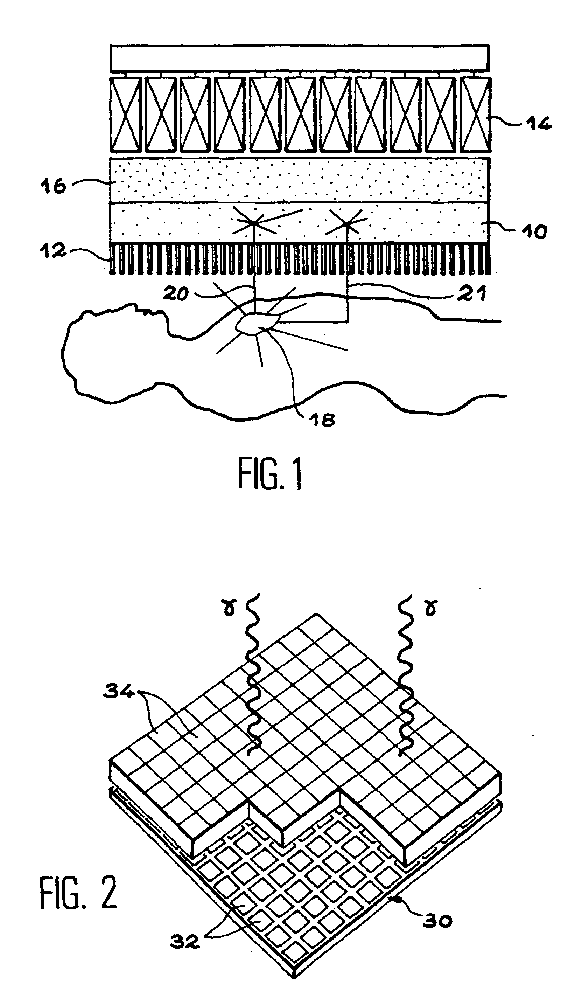

Les gamma-caméras utilisées sont pour la plupart des caméra de type Anger. Une telle caméra est représentée schématiquement à la figure 1.

La gamma-caméra comporte pour l'essentiel un cristal scintillateur 10, équipé d'un collimateur 12, et une pluralité de photomultiplicateurs 14 couplés optiquement avec le cristal scintillateur par un matériau transparent 16.

Un calcul barycentrique effectué sur le signal délivré par chaque photomultiplicateur, en réponse à un événement, permet de localiser l'endroit du cristal scintillateur où le rayonnement gamma a interagi avec la matière.

Cette localisation permet de connaître également la position d'une zone radioactive 18 d'où le rayonnement a été émis. Ceci est possible notamment grâce au collimateur 12 qui, comme le montre la figure 1, permet d'éliminer les rayonnements dont l'incidence n'est pas sensiblement normale à la face d'entrée du détecteur.

Les rayons gamma qui atteignent le cristal scintillateur peuvent, comme le rayon 20 de la figure 1, être des rayons qui, après avoir quitté la zone radioactive 18, interagissent directement avec le détecteur. Ces rayons font partie d'un phénomène désigné dans la suite du texte par "rayonnement direct".

D'autres rayons, en revanche, interagissent une ou plusieurs fois avec la matière environnant la zone radioactive avant d'atteindre le scintillateur. Ceci est le cas, par exemple, du rayon 21 sur la figure, qui interagit une première fois dans le patient, en dehors de la zone radioactive. Après cette première interaction, un rayon gamma diffusé, de plus faible énergie, atteint le scintillateur. Ce phénomène, dû à l'effet Compton, est désigné par "rayonnement diffusé" dans la suite du texte.

On observe sur la figure que le rayonnement diffusé est susceptible de provoquer une localisation erronée de la zone radioactive et contribue à dégrader le contraste de l'image médicale, par ajout de bruit.

Comme évoqué ci-dessus, le rayonnement diffusé se caractérise par le fait que son énergie est inférieure à celle du rayonnement direct.

En effectuant une discrimination des signaux de détection, c'est-à-dire en rejetant ceux dont l'amplitude en fonction de l'énergie est inférieure à un seuil déterminé ou dont l'amplitude en fonction de l'énergie est située en dehors d'une fenêtre déterminée, il est possible d'éliminer la contribution du rayonnement diffusé.

En général, on fixe une fenêtre en amplitude autour de la valeur maximale d'amplitude en fonction de l'énergie des signaux pour une énergie d'émission donnée de la zone radioactive.

Si la fenêtre est étroite, on augmente le contraste de l'image en limitant l'acceptation du rayonnement diffusé. Ceci, cependant, se fait au détriment du nombre d'événements efficaces détectés, c'est-à-dire du nombre d'événements utilisables pour la formation d'une image.

Inversement, si la fenêtre est plus large, le nombre d'événements est plus grand pour un même temps de mesure, mais le contraste de l'image se trouve dégradé.

Dans le cadre des applications à l'imagerie médicale, il n'est pas possible d'injecter aux patients de trop fortes doses radioactives et il n'est pas confortable de prolonger pour un temps long la durée de l'examen. Ainsi, le nombre d'événements efficaces mesurés par unité de temps et la résolution en énergie du détecteur sont des paramètres importants.

La résolution en énergie est comprise comme étant le rapport de la largeur à mi-hauteur d'une distribution du pic d'énergie autour de la valeur d'énergie d'émission, sur l'énergie d'émission.

Un développement récent de gamma-caméras, dans lesquelles les détecteurs à scintillateur sont remplacés par des détecteurs à semi-conducteur, a permis d'améliorer l'acquisition des événements en termes d'efficacité et de résolution en énergie.

Les détecteurs à semi-conducteur comme par exemple le CdTe, CdZnTe, AsGa, PbI₂ convertissent directement les photons gamma en porteurs de charges. Pour un rayonnement de même intensité, le nombre de charges créées est d'un ordre de grandeur supérieur à celui obtenu en détection indirecte avec les détecteurs à scintillateur. Ainsi, la résolution des détecteurs à semi-conducteur est également améliorée.

La figure 2 montre la structure d'un détecteur à semi-conducteur. Celui-ci comprend une plate-forme 30 équipée de circuits électroniques 32 intégrés et sur laquelle sont montés une pluralité d'éléments de détection 34.

Les éléments de détection 34 se présentent chacun sous la forme d'un bloc de semi-conducteur avec deux faces parallèles opposées sur lesquelles sont prévues des électrodes. Un champ électrique appliqué sur les électrodes permet de faire migrer les porteurs de charges, c'est-à-dire les électrons et les trous formés par l'interaction du rayonnement avec le semi-conducteur. Les électrodes, non représentées sur la figure, sont également prévues pour recevoir les charges et les transférer vers les circuits intégrés de la plate-forme 30 pour la formation d'un signal de détection.

Toutes les charges créées dans le semi-conducteur ne migrent pas directement vers les électrodes. En effet, des défauts dans les semi-conducteurs piègent certains porteurs de charges au cours de leur migration et diminuent leur durée de vie et ce, d'autant plus que le semi-conducteur est épais.

La charge créée par un rayonnement gamma se répartit en une charge portée par les électrons et en une charge portée par les trous. Or, la mobilité des trous est inférieure à celle des électrons et leur efficacité de collection est plus mauvaise. Ainsi, l'ensemble des charges créées ne contribue pas de façon égale au signal de détection finalement délivré.

Dans le spectre en énergie du signal de détection, ceci se traduit par une "traînée" correspondant à une énergie plus faible que l'énergie des photons atteignant la matière des éléments de détection.

La "traînée" est caractéristique du piégeage de charges dans la matière avant leur collection.

Les événements détectés, dont l'énergie est inférieure à l'énergie des photons gamma reçus, en raison du phénomène de piégeage, sont alors confondus avec ceux résultant du rayonnement diffusé mentionné précédemment, pour lequel l'énergie est également inférieure à celle du rayonnement direct.

Ainsi, pour les détecteurs à semi-conducteur, la mise en place d'une fenêtre d'acceptation en amplitude pour les signaux, a pour conséquence d'éliminer non seulement les événements correspondant au rayonnement diffusé, mais aussi les événements affectés par le piégeage de charges, et qui pourtant correspondent à un rayonnement direct.

Les difficultés de collection des charges et les influences sur le signal de détection sont décrites dans le brevet FR-2 738 919. Ce brevet propose un procédé et un dispositif d'exploitation d'un signal fourni par un détecteur qui permet de s'affranchir des mauvaises propriétés de transport des trous dans la matière des éléments de détection. Le procédé décrit a pour objectif d'effectuer une correction électronique, après l'acquisition d'un spectre biparamétrique de la contribution des événements pour lesquels toute la charge déposée dans le détecteur n'a pas pu être collectée, et dont les signaux présentent une amplitude totale qui est inférieure à l'amplitude attendue.

La mise en oeuvre pratique de cette méthode dans une gamma-caméra à usage médical impliquerait d'acquérir pendant l'examen un spectre biparamétrique avec une bonne statistique pour chaque pixel. Pour des raisons de dose et de temps d'acquisition, ceci n'est cependant pas possible dans le cadre des examens cliniques. Le traitement de correction nécessiterait une grande quantité de mémoire et conduirait à calculer par logiciel, et a posteriori, la correction à appliquer. Un tel traitement est donc long et doit être effectué autant de fois qu'il y a de pixels dans le détecteur. Or, comme le traitement est effectué après l'acquisition, il est impossible d'afficher en temps réel l'image des événements acceptés.

Ceci constitue un handicap important pour le diagnostic médical.

Une autre difficulté existant dans les détecteurs à semi-conducteur est que l'efficacité de la détection et de la collection des charges n'est pas la même pour tous les éléments de détection.

La collection des charges dépend de la structure et de la qualité cristalline des éléments de détection. Elle dépend également du champ électrique appliqué aux électrodes et des éventuels défauts présents dans le matériau susceptibles de piéger les charges.

De la même façon, de légères variations de la surface, ou de l'épaisseur des éléments de détection, influent aussi sur leur efficacité de détection.

Ces phénomènes conduisent à des images non uniformes qui ne permettent pas de diagnostic médical précis.

A priori, il serait possible d'établir pour chaque élément de détection un coefficient multiplicateur de correction fixe, ajusté pour obtenir une efficacité de détection uniforme.

Cette solution n'est cependant pas satisfaisante car elle reviendrait à comptabiliser artificiellement des événements inexistants, pour les éléments de détection les moins efficaces (coefficient de correction supérieur à 1), et à éliminer sans discernement des événements pour les éléments de détection les plus efficaces (coefficient de correction inférieur à 1).

### Exposé de l'invention

La présente invention a pour but de proposer un procédé et un dispositif de tri d'événements pour un détecteur à semi-conducteur, qui permette de distinguer les signaux provenant d'événements résultant d'un rayonnement diffusé et les signaux d'événements résultant d'une collection de charges incomplète.

Un autre but est de proposer un procédé permettant d'assurer une correction d'uniformité de détection des différents éléments de détection d'un détecteur.

Un but est également de proposer un tel procédé de correction qui permette de retenir sélectivement et préférentiellement les événements résultant du rayonnement direct.

Enfin, un but de l'invention est de proposer un procédé de traitement susceptible d'être mis en oeuvre en temps réel et en continu afin d'autoriser la formation d'une image instantanément et faciliter ainsi le diagnostic médical.

Pour atteindre les buts ci-dessus, l'invention a plus précisément pour objet un procédé de tri en temps réel de signaux d'événements de détection d'un détecteur de rayonnements gamma (γ) comportant au moins un élément de détection à semi-conducteur. Dans ce procédé :
a) lors d'une phase de calibrage,
   - on établit pour chaque signal d'événement une donnée d'amplitude et une donnée de temps de montée du signal,
   - on acquiert pour un ensemble comprenant au moins un élément de détection un spectre de détection biparamétrique d'événements avec des données d'amplitude et de temps de montée,
   - on établit pour chaque spectre au moins une fenêtre biparamétrique d'acceptation correspondant respectivement à une corrélation amplitude-temps de montée caractéristique d'au moins une énergie de rayonnement et
b) lors d'une phase d'examen,
   - on établit en temps réel pour chaque signal d'événement détecté de chaque ensemble d'éléments de détection un couple de données d'amplitude et de temps de montée,
   - on effectue en temps réel un tri des événements, en sélectionnant les signaux dont les données d'amplitude et de temps de montée sont à l'intérieur de la fenêtre biparamétrique de l'ensemble d'éléments de détection correspondant, et en rejetant les signaux dont les données d'amplitude et de temps de montée sont à l'extérieur de ladite fenêtre biparamétrique.

On entend par fenêtre biparamétrique, une fenêtre délimitée par deux paramètres caractéristiques des événements. Il s'agit en l'occurrence de l'amplitude et du temps de montée des signaux correspondant aux événements détectés.

L'invention est basée sur le principe physique selon lequel les signaux des événements résultant du rayonnement direct mais correspondant à la traînée du spectre en énergie mentionné en introduction, présentent une corrélation entre leur amplitude et leur temps de montée différente de celle obtenue pour les événements résultant du rayonnement diffusé.

La première phase du procédé, c'est-à-dire la phase de calibrage peut être mise en oeuvre en l'absence d'un patient à examiner.

Une source de rayonnement correspondant au matériau radioactif injecté au patient est disposée en face du détecteur. L'activité de cette source et le temps d'exposition peuvent être supérieurs à ceux retenus pour l'examen d'un patient. Ainsi, lors de la phase de calibrage, on peut acquérir un spectre portant sur un grand nombre d'événements.

On utilise de préférence une source présentant un flux sensiblement uniforme.

La phase de calibrage peut avoir lieu simultanément pour tous les éléments de détection ou seulement pour une partie des éléments.

Pour réduire la taille de la mémoire d'acquisition lors de la phase de calibrage, il est possible de traiter successivement plusieurs ensembles d'éléments de détection comprenant chacun un ou plusieurs éléments.

Le procédé peut être mis en oeuvre avec une source mono-énergétique ou une source dont le spectre d'émission présente plusieurs pics principaux à des énergies différentes.

Dans ce dernier cas, on peut établir une fenêtre biparamétrique pour chacune des énergies de rayonnement.

De façon exhaustive, on peut établir une fenêtre biparamétrique pour chaque énergie principale d'émission de la source et ce pour chacun des éléments de détection du détecteur.

En particulier, pour chaque élément de détection, ou chaque ensemble d'éléments, la phase de calibrage peut comporter successivement des étapes lors desquelles :
- on définit un ensemble continu de tranches de temps de montée,
- on affecte chaque événement détecté à une tranche de temps de montée en fonction de sa donnée de temps de montée,
- on établit pour chaque tranche de temps de montée un spectre d'amplitude avec les données d'amplitude des événements dont le temps de montée est compris dans ladite tranche de temps de montée,
- on détermine pour chaque tranche de temps de montée un maximum du spectre d'amplitude,
- on fixe pour chaque tranche de temps de montée un intervalle d'amplitude s'étendant de part et d'autre dudit maximum.

Le nombre de tranches de temps de montée et l'intervalle de temps de montée correspondant à chaque tranche peut être ajusté en fonction d'une finesse de résolution recherchée. L'intervalle de temps est choisi, par exemple de l'ordre de 50 ns.

Par ailleurs, on entend par ensemble continu de tranches de temps de montée un ensemble successif de tranches tel que chaque borne supérieure de temps de montée d'une tranche corresponde à la borne inférieure de la tranche suivante.

Enfin on entend par spectre d'amplitude le relevé, pour chaque amplitude ou pour un ensemble continu d'intervalles d'amplitude, du nombre d'événements dont le signal présente une telle amplitude.

De préférence, avant de déterminer le maximum de chaque spectre d'amplitude, on peut avantageusement effectuer un lissage dudit spectre. Ce lissage peut avoir lieu par calcul mathématique.

L'intervalle d'amplitude fixé pour chaque tranche de temps de montée peut s'étendre de façon symétrique ou non de part et d'autre du maximum du spectre d'amplitude.

Par ailleurs, la largeur de l'intervalle peut être constante ou non. Cependant, dans une mise en oeuvre préférée, on peut fixer un intervalle d'amplitude qui présente une largeur fonction de l'amplitude qui correspond au maximum du spectre d'amplitude de chaque tranche de temps de montée.

En particulier, il est possible de prévoir un intervalle d'amplitude dont la largeur diminue en fonction de l'amplitude correspondant au maximum du spectre d'amplitude pour chaque tranche de temps de montée. La largeur de l'intervalle peut aussi être diminuée en fonction de la tranche de temps de montée considérée.

Une telle mesure permet de réduire l'importance accordée aux événements présentant une faible amplitude et/ou un faible temps de montée. Ces événements sont plus difficilement séparables de ceux résultant du rayonnement diffusé et présentent donc une contribution moins intéressante pour la formation d'une image.

Lors de la phase d'examen, il est possible de vérifier pour chaque événement si la donnée d'amplitude est comprise dans l'intervalle d'amplitude associé à la tranche de temps de montée correspondant à la donnée de temps de montée dudit événement.

Si le résultat de la vérification est positif, l'événement est retenu et dans le cas contraire, il est rejeté.

Cette opération de vérification peut être effectuée rapidement et en temps réel de sorte qu'il n'existe quasiment pas de retard entre la détection d'un événement et la formation d'une image tenant compte dudit événement.

Selon une mise en oeuvre particulière possible du procédé, on peut établir, lors de la phase a), une table de couples de plages d'amplitude et de temps de montée, dans laquelle les couples de plages d'amplitude et de temps de montée correspondant à la fenêtre biparamétrique sont associés à une donnée logique de validation des événements et dans laquelle les couples de plages hors de la fenêtre biparamétrique sont associés à une donnée logique de rejet des événements, et lors de l'étape b), on vérifie pour chaque événement si les données d'amplitude et de temps de montée correspondent à un couple de plages d'amplitude associé à une donnée logique de validation ou de rejet, et on rejette les événements correspondant à une donnée logique de rejet.

A titre d'illustration, on peut associer la valeur logique "1" aux couples amplitude-temps de montée correspondant à l'intérieur de la fenêtre biparamétrique d'acceptation et on peut associer la valeur logique "0" aux couples amplitude-temps de montée extérieurs à la fenêtre biparamétrique.

L'invention concerne également un procédé de correction d'uniformité pour un détecteur de rayonnement, c'est-à-dire une correction tendant à uniformiser l'efficacité de détection des différents éléments de détection du détecteur.

Le procédé de correction met en oeuvre le tri en temps réel tel que défini ci-dessus et comprend en outre, lors de la phase de calibrage :
- le comptage, du nombre d'événements détectés par chaque ensemble d'éléments de détection, chaque ensemble étant formé respectivement d'au moins un élément de détection, et
- la modification de la fenêtre biparamétrique de façon à augmenter une sélectivité du tri pour au moins un ensemble d'éléments de détection présentant une plus forte efficacité de détection et/ou pour diminuer ladite sélectivité pour au moins un ensemble d'éléments de détection présentant une plus faible efficacité de détection.

La modification de la fenêtre biparamétrique d'acceptation peut comprendre l'ajustage d'au moins un seuil d'acceptation en amplitude et/ou en temps de montée des événements.

La création et l'ajustage d'un seuil d'acceptation en amplitude et/ou en temps de montée permet de prendre en compte pour chaque élément de détection, ou pour chaque ensemble d'éléments de détection, un nombre plus ou moins important d'événements correspondant à des signaux qui présentent une faible amplitude et/ou un faible temps de montée.

Pour les détecteurs les plus efficaces pour lesquels il convient d'augmenter la sélectivité du tri, le procédé proposé permet d'éliminer prioritairement des événements correspondant à des signaux de faible amplitude ou de faible temps de montée, qui apportent une contribution d'information la plus incertaine pour la formation d'une image.

Comme indiqué précédemment, il est en effet plus difficile de distinguer ces événements de ceux provenant du rayonnement diffusé.

A l'inverse, pour les détecteurs les moins efficaces, pour lesquels il convient de réduire la sélectivité du tri, le procédé permet d'accepter un plus grand nombre d'événements.

Les événements supplémentaires même s'ils correspondent à des signaux présentant une amplitude et/ou un temps de montée plus faibles, apportent une meilleure information que celle obtenue en multipliant simplement le nombre d'événements par un facteur correctif arbitraire.

En d'autres termes, le procédé permet de prendre en compte des événements réels supplémentaires plutôt que des événements fictifs.

On peut observer qu'une correction supplémentaire au moyen de facteur correctif n'est pas exclue. Cependant, une telle correction porte alors sur une plage de correction plus réduite.

Pour ajuster la sélectivité du tri il est possible de comparer le nombre d'événements détectés par un élément de détection ou un ensemble d'éléments de détection pendant un temps déterminé, à un nombre d'événements de consigne. Selon le résultat de la comparaison, on peut augmenter ou diminuer respectivement la sélectivité du tri si le nombre d'événements détecté est supérieur, respectivement inférieur, au nombre d'événements de consigne.

Le nombre d'événements de consigne est par exemple le nombre d'événements moyen détecté par l'ensemble des éléments de détection pendant le temps déterminé. Il peut être aussi le nombre d'événements le plus faible détecté par l'un des éléments de détection.

Le procédé de correction d'uniformité peut être mis en oeuvre individuellement pour chaque élément de détection ou pour des ensembles d'éléments de détection comprenant plusieurs éléments de détection.

L'invention concerne également un dispositif de tri en temps réel de signaux d'événements de détection provenant d'une pluralité d'éléments de détection. Le dispositif comprend :
- des moyens pour mesurer pour chaque signal une donnée d'amplitude de signal et une donnée de temps de montée du signal,
- des moyens d'acquisition de données aptes à enregistrer dans une phase de calibrage, pour au moins un ensemble d'éléments de détection, un spectre biparamétrique de données d'amplitude et de temps de montée,
- des moyens de détermination, pour chaque ensemble d'éléments de détection, d'au moins une corrélation entre les données d'amplitude et de temps de montée,
- des moyens de sélection dans le spectre d'une fenêtre biparamétrique d'acceptation correspondant à ladite corrélation,
- une mémoire pour mémoriser pour chaque ensemble d'éléments de détection au moins un couple de plages de données de temps de montée et de données d'amplitude, correspondant à la fenêtre biparamétrique d'acceptation, et
- des moyens de tri des événements, les moyens de tri étant aptes à comparer pour chaque ensemble d'éléments de détection, les données d'amplitude et de temps de montée mesurés pour les signaux de détection dans une phase d'examen, aux couples de plages de données mémorisés, et à sélectionner les événements dont les données correspondent auxdits couples de plages mémorisés.

Le dispositif peut comporter en particulier une carte de circuits intégrés à fonction spécifique (ASIC) associée à une matrice de détection comportant les éléments de détection. La carte de circuit intégré peut alors former les moyens de mesure de l'amplitude et du temps de montée.

De façon plus précise, la matrice d'éléments de détection peut être associée à des premiers circuits intégrés de type ASIC et destinés à l'amplification, la mise en forme et le multiplexage des signaux des détecteurs. A la sortie de ces premiers circuits sont connectés des deuxièmes circuits destinés à traiter les signaux de façon à établir pour chaque signal quatre données qui sont les coordonnées des position X, Y de l'événement détecté dans un plan de détection formé par les éléments de détection, la donnée de l'amplitude du signal et la donnée de son temps de montée.

Les coordonnées de position X, Y de l'événement peuvent simplement être données en fonction de la position dans le plan de détection de l'élément de détection qui a délivré le signal correspondant.

Les premiers et deuxièmes circuits peuvent être intégrés sur une ou plusieurs cartes. Ces cartes sont associées à une plate-forme de réception des éléments de détection.

Les moyens d'acquisition, de détermination d'une corrélation, les moyens de sélection et les moyens de tri peuvent être réalisés sous la forme d'un programme d'ordinateur de traitement des données de signal évoquées ci-dessus. Les moyens peuvent également être réalisés sous forme de circuits intégrés spécifiques.

Enfin, le dispositif peut comporter, en outre, des moyens d'ajustage de la fenêtre biparamétrique pour obtenir une efficacité de détection uniforme des événements sélectionnés pour chaque ensemble de détecteurs. Ces moyens peuvent également être réalisés sous forme de logiciel.

Comme expliqué précédemment, l'ajustage de la fenêtre biparamétrique permet de modifier la sélectivité du tri et compenser ainsi les disparités existant entre les efficacités de détection de différents éléments de détection ou de différents ensembles d'éléments de détection.

D'autres caractéristiques et avantages de la présente invention ressortiront mieux de la description qui va suivre, en référence aux figures des dessins annexés. Cette description est donnée à titre purement illustratif et non limitatif.

### Brève description des figures

- la figure 1, déjà décrite, est une représentation schématique simplifiée d'une coupe de détecteur d'une gamma-caméra de type Anger,
- la figure 2, déjà décrite, est un écorché partiel et schématique d'un détecteur à semi-conducteur,
- la figure 3 est un graphique illustrant un spectre d'acquisition mis en oeuvre dans le procédé de l'invention pour la détermination d'une fenêtre biparamétrique,
- la figure 4 est un schéma synoptique simplifié d'un dispositif de tri conforme à l'invention.

### Description détaillée de modes de mise en oeuvre de l'invention

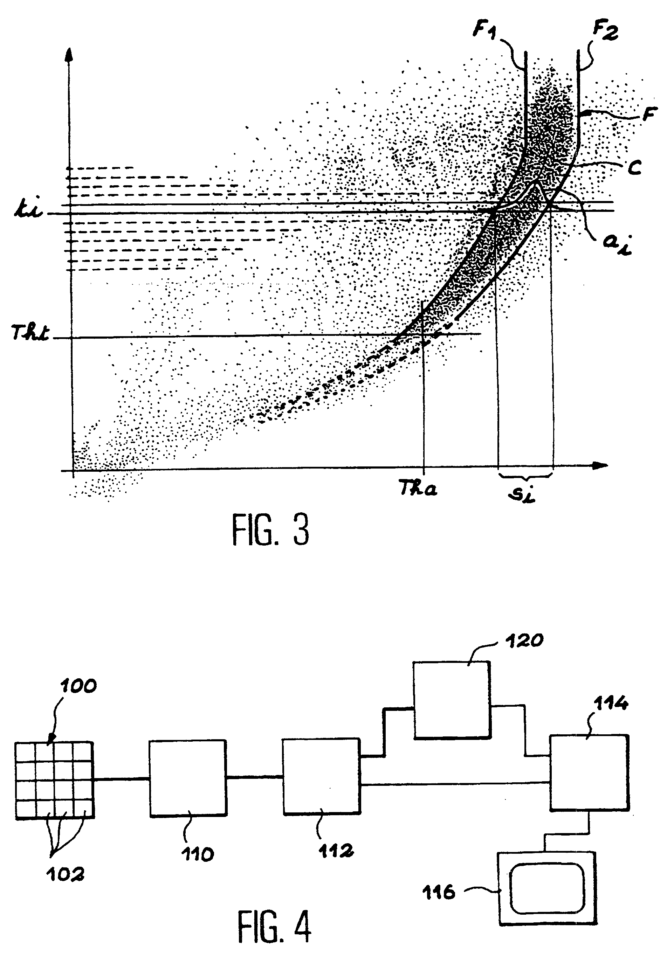

La figure 3 montre un spectre d'acquisition d'événements pour un élément de détection d'un détecteur à semi-conducteur. Les événements peuvent être caractérisés par une donnée de temps de montée et une donnée d'amplitude du signal de détection. Toutefois, comme ils proviennent d'un même élément de détection, tous les événements de ce spectre présentent par conséquent les mêmes données de position. La description qui suit reste cependant applicable à un ensemble comprenant plusieurs éléments de détection, donc à des événements avec des données de position différentes.

Pour des raisons de simplification, le spectre représenté est celui obtenu avec une source monoénergétique.

Le spectre de la figure 3 est acquis pendant la première phase du procédé, c'est-à-dire la phase de calibrage. L'acquisition est poursuivie jusqu'à l'obtention d'un nombre d'événements suffisants pour un traitement de type statistique. A titre d'exemple, le spectre de la figure 3 peut porter sur 100 000 événements.

La figure 3 indique les événements en fonction de l'amplitude du signal correspondant, repérée en abscisse, et le temps de montée du signal, repéré en ordonnée. Les échelles des axes d'amplitude et de temps de montée sont libres.

L'échelle des temps de montée est découpée en "tranches" dont chacune présente une largeur déterminée. Sur la figure, une seule tranche est repérée avec la référence tᵢ.

Chaque événement détecté lors de la phase de calibrage, est représenté par un point sur la figure. Il est affecté à une tranche de temps de montée donnée, en fonction du temps de montée du signal produit par l'élément de détection en réponse à cet événement.

Avec tous les événements affectés à une même tranche de temps de montée on établit un spectre d'amplitude. Le spectre d'amplitude peut être établi en découpant également l'échelle des amplitudes en tranches et en comptabilisant le nombre d'événements dans chaque tranche d'amplitude. Enfin, le spectre d'amplitude peut être lissé.

A titre d'illustration, une partie de la courbe de lissage du spectre d'amplitude est -schématiquement reportée sur la figure pour la tranche de temps de montée tᵢ. La courbe de lissage du spectre d'amplitude porte la référence aᵢ.

Pour chaque tranche de temps de montée, on recherche ensuite le maximum du spectre d'amplitude ou de la courbe de lissage.

On observe que les maximums des spectres d'amplitude correspondant aux différentes tranches du temps de montée, se situent sensiblement sur une courbe repérée avec la référence C.

Cette courbe est représentative d'une corrélation existant entre le temps de montée et l'amplitude d'événements résultant de la détection d'un rayonnement direct. La courbe est désignée par "courbe de corrélation" dans la suite du texte.

Dans l'exemple de la figure, il n'existe qu'une seule courbe de corrélation C en raison du caractère monoénergétique de la source utilisée.

Toutefois, lorsque la source comporte plusieurs raies d'émission d'énergie différentes, un nombre correspondant de courbes de corrélation peuvent être distinguées dans le spectre.

Dans ce cas, il convient en outre de vérifier pour chaque spectre d'amplitude, que le maximum déterminé se trouve bien sur une courbe "physique". En d'autres termes, ceci revient à déterminer les maximums sur des courbes de corrélation ne présentant pas de discontinuité de pente.

Une étape suivante consiste à déterminer pour chaque tranche de temps de montée un intervalle d'amplitude s'étendant de part et d'autre du maximum du spectre d'amplitude. A titre d'illustration, l'intervalle associé à la tranche de temps de montée tᵢ sur la figure 3 est repéré avec la référence sᵢ.

L'extension de l'intervalle de part et d'autre de la courbe de corrélation peut être ajusté pour obtenir une sélectivité de tri des événements plus ou moins importante, c'est-à-dire pour rejeter de façon plus ou moins sélective les événements liés au rayonnement diffusé.

Dans l'exemple illustré, la largeur de l'intervalle d'amplitude est choisie plus grande pour les amplitudes et les temps de montée élevés et est choisie plus petite pour les faibles amplitudes et les faibles temps de montée. Elle peut aussi être ajustée globalement en fonction de la résolution de l'élément de détection.

L'ensemble des intervalles d'amplitude autour de la courbe de corrélation, établi pour l'ensemble des tranches de temps de montée, constitue, dans l'exemple décrit, la fenêtre biparamétrique d'acceptation F.

Dans l'exemple de la figure, la fenêtre F est délimitée par deux courbes F₁ et F₂ qui sont formées respectivement des valeurs limites minimales et maximales des intervalles choisis pour chaque tranche de temps de montée.

Comme indiqué précédemment, les différents éléments de détection d'un détecteur ne présentent pas la même efficacité de détection.

En jouant sur la taille de la fenêtre biparamétrique F, il est possible de modifier la sélectivité du tri et donc de corriger les défauts d'uniformité.

La modification de la taille de la fenêtre est de préférence effectuée en ajustant la fenêtre pour les événements correspondant aux valeurs les plus faibles de temps de montée ou d'amplitude.

L'ajustage dans l'exemple décrit est réalisé par la mise en place d'un seuil d'amplitude et/ou d'un seuil de temps de montée dont la valeur peut être modifiée. Sur la figure, les seuils d'amplitude et de temps de montée sont respectivement repérés avec les références Tha et Tht.

Pour une meilleure compréhension de la deuxième phase du procédé, il convient à présent d'examiner le schéma du dispositif donné par la figure 4.

La référence 100 sur la figure 4 désigne une matrice d'éléments de détection 102 à semi-conducteur, agencées dans un plan de détection. Cette matrice est comparable à celle décrite en référence à la figure 2.

Les signaux délivrés par les éléments de détection sont dirigés vers un premier circuit intégré spécifique (ASIC) 110. Ce circuit comprend des voies d'amplification des signaux pour chaque élément de détection et des moyens de multiplexage des voies.

Un deuxième circuit 112 est prévu pour déterminer l'amplitude et le temps de montée de chaque signal et pour mettre en forme des données correspondant à ces grandeurs, ainsi que des données représentant les coordonnées des événements. Les coordonnées des événements sont liées à la position de l'élément de détection correspondant dans le plan de détection.

Les données sont dirigées vers un ordinateur 114 destiné à effectuer les calculs et traitements liés à la phase de calibrage et destiné à construire une image (médicale) à partir des données lors de la phase d'examen. L'image est affichée sur un écran 116.

Lors de la phase de calibrage, l'ordinateur est conçu pour construire, à partir des données, pour chaque élément de détection, une table d'acceptation comprenant les valeurs logique "1" ou "0". Les valeurs logique "1" sont affectées à des couples amplitude-temps de montée correspondant à l'intérieur de la fenêtre de corrélation, et des valeurs logique "0" sont affectées aux couples amplitude-temps de montée en dehors de la fenêtre. Plus précisément, les valeurs logiques peuvent être affectées à des couples de plages d'amplitude et de temps de montée.

A titre de variante, les tables peuvent également être construites à partir des bornes de la fenêtre biparamétrique, c'est-à-dire, en se référant à la figure 3, à partir des courbes F₁, F₂ délimitant la fenêtre et des valeurs de seuil Tha, Tht.

Les tables d'acceptation sont stockées dans une mémoire indiquée avec la référence 120 sur la figure 4.

Lors de la phase d'examen, les circuits 110 et 112 établissent toujours les données d'amplitude, de temps de montée et de coordonnées des événements à partir des signaux des éléments de détection.

Les données sont utilisées pour interroger en temps réel la table d'acceptation de l'élément de détection correspondant et pour lire la valeur logique associée au couple amplitude-temps de montée.

Si cette valeur est "1", l'événement est retenu pour la formation d'une image et si cette valeur est "0", l'événement est ignoré.

L'interrogation des tables d'acceptation est effectuée en temps réel par un adressage direct de la table concernée dans la mémoire 120 grâce aux données contenues dans le signal de sortie de 112.

La modification des seuils Tha et Tht peut également être effectuée par l'ordinateur 114 selon le procédé décrit précédemment, pour rendre l'efficacité de détection des différents éléments de détection plus uniforme.

## Revendications

1. Procédé de tri en temps réel de signaux d'événements de détection d'un détecteur de rayonnements gamma (γ) comportant au moins un élément de détection à semi-conducteur, dans lequel :
a) lors d'une phase de calibrage:
- on établit pour chaque signal d'événement une donnée d'amplitude et une donnée de temps de montée du signal,
- on acquiert pour au moins un ensemble comprenant au moins un élément de détection, un spectre de détection biparamétrique d'événements avec des données d'amplitude et de temps de montée,
- on établit, pour chaque spectre, au moins une fenêtre biparamétrique (F) d'acceptation correspondant respectivement à une corrélation amplitude-temps de montée caractéristique d'au moins une énergie de rayonnement, et
b) lors d'une phase d'examen:
- on établit en temps réel pour chaque signal d'événement détecté de chaque ensemble d'éléments de détection un couple de données d'amplitude et de temps de montée,
- on effectue en temps réel un tri des événements, en sélectionnant les signaux dont les données d'amplitude et de temps de montée sont à l'intérieur de la fenêtre biparamétrique de l'ensemble d'éléments de détection correspondant, et en rejetant les signaux dont les données d'amplitude et de temps de montée sont à l'extérieur de ladite fenêtre biparamétrique.

2. Procédé de tri selon la revendication 1, dans lequel lors de l'étape a) :
- on définit un ensemble continu de tranches de temps de montée (ti),
- on affecte chaque événement à une tranche temps de montée en fonction de sa donnée de temps de montée,
- on établit pour chaque tranche de temps de montée un spectre d'amplitude avec les données d'amplitude des événements dont le temps de montée est compris dans ladite tranche de temps de montée,
- on détermine pour chaque tranche de temps de montée un maximum du spectre d'amplitude,
- on fixe pour chaque tranche de temps de montée un intervalle d'amplitude (si) s'étendant de part et d'autre dudit maximum.

3. Procédé selon la revendication 2, dans lequel avant de déterminer le maximum de chaque spectre d'amplitude on effectue un lissage dudit spectre.

4. Procédé selon la revendication 2, dans lequel l'intervalle d'amplitude (si) s'étend de façon symétrique de part et d'autre dudit maximum.

5. Procédé selon la revendication 2, dans lequel l'intervalle d'amplitude présente une largeur fonction de l'amplitude correspondant au maximum du spectre d'amplitude de chaque tranche de temps de montée.

6. Procédé selon la revendication 2, dans lequel, lors de la phase d'examen on vérifie pour chaque événement si la donnée d'amplitude est comprise dans l'intervalle d'amplitude associé à la tranche de temps de montée correspondant à sa donnée de temps de montée.

7. Procédé selon la revendication 1, dans lequel,
- lors de la phase a), on établit et mémorise une table avec des couples de plages d'amplitude et de temps de montée, dans laquelle les couples de plages d'amplitude et de temps de montée correspondant à la fenêtre biparamétrique sont associés à une donnée logique de validation des événements et dans laquelle les couples de plages hors de la fenêtre biparamétrique sont associés à une donnée logique de rejet des événements, et
- lors de l'étape b), on vérifie pour chaque événement si les données d'amplitude et de temps de montée correspondent à un couple mémorisé de plages d'amplitude et de temps de montée associé à une donnée logique de validation ou de rejet, et on rejette les événements correspondant à une donnée logique de rejet.

8. Procédé selon l'une des revendications précédentes, dans lequel chaque ensemble d'éléments de détection comprend un unique élément de détection.

9. Procédé de correction d'uniformité pour un détecteur de rayonnements équipé d'au moins un élément de détection à semi-conducteur, le procédé comprenant un tri en temps réel des signaux d'événements selon la revendication 1 et comprenant en outre lors de la phase de calibrage :
- le comptage du nombre d'événements détectés par chaque ensemble d'éléments de détection, et
- la modification de la fenêtre biparamétrique de façon à augmenter une sélectivité du tri pour au moins un ensemble d'éléments de détection présentant une plus forte efficacité de détection et/ou pour diminuer ladite sélectivité pour au moins un ensemble d'éléments de détection présentant une plus faible efficacité de détection.

10. Procédé selon la revendication 9, dans lequel la modification de la fenêtre biparamétrique d'acceptation comprend l'ajustage d'au moins un seuil (Tha, Tht) d'acceptation en amplitude et/ou en temps de montée des événements.

11. Procédé selon la revendication 9, dans lequel on compare le nombre d'événements détectés par un ensemble d'éléments de détection dans un temps déterminé à un nombre d'événements de consigne et dans lequel on augmente ou diminue respectivement la sélectivité du tri si le nombre d'événements détecté est supérieur, respectivement inférieur, au nombre d'événements de consigne.

12. Procédé selon la revendication 11, dans lequel le nombre d'événements de consigne est un nombre moyen d'événements détectés par l'ensemble des éléments de détection dans le temps déterminé.

13. Procédé selon la revendication 11, dans lequel le nombre d'événements de consigne est un nombre d'événements le plus faible détecté par l'un des éléments de détection.

14. Procédé selon l'une quelconque des revendications 9 à 13, dans lequel chaque ensemble d'éléments de détection comporte un unique élément de détection.

15. Dispositif de tri en temps réel de signaux d'événements de détection provenant d'une pluralité d'éléments de détection à semi-conducteur comprenant :
- des moyens (110, 112) pour mesurer pour chaque signal une donnée d'amplitude de signal et une donnée de temps de montée du signal,
- des moyens d'acquisition de données aptes à enregistrer dans une phase de calibrage, pour au moins un ensemble d'éléments de détection, un spectre biparamétrique de données d'amplitude et de temps de montée,
- des moyens de détermination pour chaque ensemble d'éléments de détection d'au moins une corrélation entre les données d'amplitude et de temps de montée,
- des moyens de sélection dans le spectre d'une fenêtre biparamétrique d'acceptation correspondant à ladite corrélation,
- une mémoire (120) pour mémoriser pour chaque ensemble d'éléments de détection au moins un couple de plages de données de temps de montée et d'amplitude correspondant à la fenêtre biparamétrique d'acceptation, et
- des moyens de tri des événements, les moyens de tri étant aptes à comparer pour chaque ensemble d'éléments de détection, les données d'amplitude et de temps de montée, mesurés pour chaque signal de détection dans une phase d'examen, aux couples de plages de données mémorisés et à sélectionner les événements dont les données correspondent auxdits couples de plages mémorisés.

16. Dispositif selon la revendication 15, comprenant au moins une carte (110, 112) de circuits intégrés à fonction spécifique (ASIC) associée à une matrice de détection (100) comportant les éléments de détection (102), et formant les moyens de mesure de l'amplitude et du temps de montée.

17. Dispositif selon la revendication 15, dans lequel le dispositif comprend un ordinateur (114) incluant, sous forme de programme, les moyens d'acquisition, de détermination d'une corrélation, les moyens de sélection et les moyens de tri.

18. Dispositif selon l'une quelconque des revendications 15 à 17, comprenant en outre des moyens d'ajustage de la fenêtre paramétrique pour obtenir une efficacité de détection uniforme des événements sélectionnés pour chaque ensemble de détecteurs.

19. Dispositif selon l'une quelconque des revendications 15 à 18, dans lequel chaque ensemble d'éléments de détection comporte un unique élément de détection.

20. Gamma-caméra équipée d'un dispositif selon la revendication 15.

## Patentansprüche

1. Verfahren zur Klassfizierung von Signalen von Detektionsereignissen eines wenigstens ein Halbleiter-Detektionselement umfassenden Gammastrahlungsdetektors, bei dem:
a) während einer Kalibrierungsphase:
- man für jedes Ereignissignal eine Amplitudengröße und eine Signalaufsteigzeitgröße ermittelt,
- man für wenigstens eine wenigstens ein Detektionselement enthaltende Einheit ein biparametrisches Detektionsspektrum von Ereignissen mit Amplituden- und Aufsteigzeitgrößen erfasst,
- man für jedes Spektrum wenigstens ein biparametrisches Akzeptanzfenster (F) ermittelt, das jeweils einer für eine Strahlungsenergie charakteristischen Amplitude-Aufsteigzeit-Korrelation entspricht, und
b) während einer Prüfphase:
- man in Echtzeit für jedes detektierte Ereignissignal jeder Detektionselemente-Einheit ein Amplituden- und Aufsteigzeitgrößen-Paar ermittelt,
- man in Echtzeit eine Klassifizierung der Ereignisse durchführt, indem die Signale selektiert werden, deren Amplituden- und Aufsteigzeitgrößen sich innerhalb des biparametrischen Fensters der entsprechenden Detektionselemente-Einheit befinden, und die Signale ausgeschieden werden, deren Amplituden- und Aufsteigzeitgrößen sich außerhalb dieses biparametrischen Fensters befinden.

2. Klassifizierungsverfahren nach Anspruch 1, bei dem - in Schritt a):
- man eine kontinuierliche Menge von Aufsteigzeitgruppen (ti) definiert,
- man jedes Ereignis in Abhängigkeit von seiner Aufsteigzeitgröße einer Aufsteigzeitgruppe zuteilt,
- man für jede Aufsteigzeitgruppe ein Amplitudenspektrum mit den Amplitudengrößen der Ereignisse ermittelt, deren Aufsteigzeit in dieser Aufsteigzeitgruppe enthalten ist,
- man für jede Aufsteigzeitgruppe ein Maximum des Amplitudenspektrums bestimmt,
- man für jede Aufsteigzeitgruppe ein Amplitudenintervall (si) festlegt, das sich beiderseits des genannten Maximums erstreckt.

3. Verfahren nach Anspruch 2, bei dem man vor der Bestimmung des Maximums jedes Amplitudenspektrums eine Glättung dieses Spektrums durchführt.

4. Verfahren nach Anspruch 2, bei dem das Amplitudenintervall (si) sich symmetrisch beiderseits des genannten Maximums erstreckt.

5. Verfahren nach Anspruch 2, bei dem das Amplitudenintervall eine Breite aufweist, die abhängig ist von der Amplitude, die dem Maximum des Amplitudenspektrums jeder Aufsteigzeitgruppe entspricht.

6. Verfahren nach Anspruch 2, bei dem man während der Prüfphase für jedes Ereignis verifiziert, ob die Amplitudengröße in dem Amplitudenintervall enthalten ist, das der Aufsteigzeitgruppe zugeordnet ist, die seiner Aufsteigzeit entspricht.

7. Verfahren nach Anspruch 1, bei dem:
- während der Phase a) - man eine Tabelle mit Amplituden- und Aufsteigzeitbereichs-Paaren erstellt und abspeichert, in der die dem biparametrischen Fenster entsprechenden Amplituden- und Aufsteigzeitbereichs-Paare einer logischen Validationsgröße der Ereignisse zugeordnet werden, und in der die Bereichpaare außerhalb des biparametrischen Fensters einer logischen Ausscheidungsgröße der Ereignisse zugeordnet sind, und
- während des Schritts b) - man bei jedem Ereignis verifiziert, ob die Amplituden- und Aufsteigzeitgrößen einem abgespeicherten, einer logischen Validations- oder Ausscheidungsgröße zugeordneten Amplituden- und Aufsteigzeitbereichs-Paar entsprechen, und man die einer logischen Ausscheidungsgröße entsprechenden Ereignisse ausscheidet.

8. Verfahren nach einem der vorangehenden Ansprüche, bei dem jede Detektionselemente-Einheit ein einziges Detektionselement umfasst.

9. Gleichmäßigkeitskorrektur-Verfahren für einen mit wenigstens einem Halbleiter-Detektionselement ausgestatteten Detektor, wobei dieses Verfahren eine Echtzeit-Klassifizierung der Signale von Ereignissen nach Anspruch 1 umfasst, und außerdem während der Kalibrierungsphase umfasst:
- das Zählen der Anzahl detektierter Ereignisse für jede Detektionselemente-Einheit, und
- das Modifizieren des biparametrischen Fensters, um eine Selektivität der Klassierung für wenigstens eine Detektionselemente-Einheit zu erhöhen, die eine größere Detektionseffizienz aufweist, und/oder um diese Selektivität für wenigstens eine Detektionselemente-Einheit zu verringern, die eine kleinere Detektionseffizienz aufweist.

10. Verfahren nach Anspruch 9, bei dem das Modifizieren des biparametrischen Akzeptanzfensters das Justieren wenigstens einer Akzeptanzschwelle (Tha, Tht) der Amplitude undloder Aufsteigzeit der Ereignisse umfasst.

11. Verfahren nach Anspruch 9, bei dem man die Anzahl der durch eine Detektionselemente-Einheit innerhalb einer festgelegten Zeit detektierten Ereignisse vergleicht mit einer Einstellgröße der Anzahl von Ereignissen, oder Ereignismengen-Einstellgröße, und in der man jeweils die Selektivität der Klassifizierung erhöht oder verringert, wenn die Anzahl detektierter Ereignisse größer beziehungsweise kleiner ist als diese Ereignismengen-Einstellgröße.

12. Verfahren nach Anspruch 11, bei dem die Ereignismengen-Einstellgröße einer durchschnittlichen durch die Gesamtheit der Detektionselemente innerhalb der festgelegten Zeit detektierten Anzahl von Ereignissen entspricht.

13. Verfahren nach Anspruch 11, bei dem die Ereignismengen-Einstellgröße einer kleinsten durch eines der Detektionselemente detektierten Ereignismenge entspricht.

14. Verfahren nach einem der Ansprüche 9 bis 13, bei dem jede Detektionselemente-Einheit ein einziges Detektionselement umfasst.

15. Echtzeit-Klassfizierungsvorrichtung von Signalen von Detektionsereignissen, die von einer Vielzahl von Halbleiter-Detektionselementen stammen, umfassend:
- Einrichtungen (110, 112), um für jedes Signal eine Signal-Amplitudengröße und eine Aufsteigzeitgröße des Signals zu messen,
- Datenerfassungseinrichtungen, fähig in einer Kalibrierungsphase für wenigstens eine Detektionselemente-Einheit ein biparametrisches Spektrum von Amplituden- und Aufsteigzeitgrößen zu speichern,
- Einrichtungen, um für jede Detektionselemente-Einheit wenigstens eine Korrelation zwischen den Amplituden- und Aufsteigzeitgrößen zu ermitteln bzw. festzulegen,
- Einrichtungen zum Selektieren eines biparametrischen Akzeptanzfensters in dem Spektrum,
- einen Speicher (120), um für jede Detektionselemente-Einheit wenigstens ein dem biparametrischen Akzeptanzfenster entsprechendes Amplituden- und Aufsteigzeitbereichs-Paar abzuspeichern, und
- Klassfizierungseinrichtungen der Ereignisse, fähig für jede Detektionselemente-Einheit die für jedes Detektionssignal in einer Prüfphase gemessenen Amplituden- und Aufsteigzeitgrößen zu vergleichen mit den abgespeicherten Größenbereichspaaren und die Ereignisse zu selektieren, deren Größen diesen abgespeicherten Bereichspaaren entsprechen.

16. Vorrichtung nach Anspruch 15 mit wenigstens einer Karte (110, 112) mit integrierten Schaltungen mit spezifischer Funktion (ASIC), einer Detektionsmatrix (100) zugeordnet, welche die Detektionselemente (102) umfasst und die Einrichtungen zum Messen der Amplitude und der Aufsteigzeit bildet.

17. Vorrichtung nach Anspruch 15, bei der die Vorrichtung einen Computer (114) umfasst, der in Programmform die Mittel der Erfassung, der Ermittlung bzw. Festlegung einer Korrelation, die Selektionsmittel und die Klassifizierungsmittel enthält.

18. Vorrichtung nach einem der Ansprüche 15 bis 17, die außerdem Einrichtungen zur Einstellung des parametrischen Fensters umfasst, um eine gleichmäßige Detektionseffizienz der für jede Detektoreneinheit selektierten Ereignisse zu erlangen.

19. Vorrichtung nach einem der Ansprüche 15 bis 18, bei der jede Detektionselemente-Einheit ein einziges Detektionselement umfasst.

20. Gamma-Kamera, ausgerüstet mit einer Vorrichtung nach Anspruch 15.

## Claims

1. Process for sorting in real time of detection event signals from a gamma (γ) ray detector including at least one semi-conductor detection element in which:
a) during a calibration phase:
- for each event signal, amplitude data and signal rise time data are established,
- a biparametric detection spectrum with amplitude and rise time data is acquired for at least one set including at least one detection element,
- a biparametric acceptance window (F) corresponding respectively to an amplituderise time correlation characteristic of at least one radiation energy is established for each spectrum, and
b) during an examination phase:
- an amplitude, rise time data pair is established in real time for each event signal detected from each set of detection elements,
- the events are sorted in real time, selecting the signals according to whether their amplitude and rise time data are or are not within the biparametric window of the corresponding set of detection elements, and rejecting the signals of which the amplitude and rise time data are outside the aforesaid biparametric window.

2. Sorting process according to claim 1, in which during step a):
- a continuous set of rise time sections (ti) is defined,
- each event is assigned to a rise time section as a function of its rise time data,
- for each rise time section, an amplitude spectrum with the amplitude data of the events for which the rise time is included in the aforesaid rise time section is established,
- an amplitude spectrum maximum is determined for each rise time section
- an amplitude interval (si) on both sides of the aforesaid maximum is set for each rise time section.

3. Process according to claim 2, in which smoothing of the aforesaid spectrum is done before determining the maximum of each spectrum.

4. Process according to claim 2, in which the amplitude interval (si) is symmetrical on either side of the aforesaid maximum.

5. Process according to claim 2, in which the amplitude interval has a width as a function of the amplitude corresponding to the maximum of the amplitude spectrum of each rise time section.

6. Process according to claim 2 in which, during the examination phase, it is verified for each event that the amplitude data is within the amplitude interval associated with the rise time section corresponding to its rise time data.

7. Process according to claim 1, in which,
- during step a), a table of pairs of amplitude and rise time ranges is established and recorded, in which the pairs of amplitude and rise time ranges corresponding to the biparametric window are associated with logical event validation data in which the pairs of ranges outside the biparametric window are associated with logical event rejection data, and
- during step b), for each event there is a verification to see whether the amplitude and rise time data correspond to a memorised pair of amplitude and rise time ranges associated with logical validation or rejection data, and the events corresponding to logical reject data are rejected.

8. Process according to any one of the preceding claims, in which each set of detection elements includes a single detection element.

9. Uniformity correction process for a radiation detector equipped with at least one semi-conductor detection element, the process including a sort in real time of event signals according to claim 1 and also including, during the calibration phase:
- counting of the number of events detected by each set of detection elements, and
- modification of the biparametric window so as to increase the sort selectivity for at least one set of detection elements with a higher detection efficiency and/or to decrease the aforesaid selectivity for at least one set of detection elements with lower detection efficiency.

10. Process according to claim 9, in which the modification of the biparametric acceptance window includes adjustment of at least one threshold (Tha, Tht) for event acceptance in terms of amplitude and/or rise time.

11. Process according to claim 9, in which the number of events detected per set of detection elements for a given time is compared with a number of reference events and in which the sort selectivity is respectively increased or decreased if the number of events detected is respectively greater or lower than the number of reference events.

12. Process according to claim 11, in which the number of reference events is an average number of events detected by the set of detection elements within the determined time.

13. Process according to claim 11, in which the reference number of events is the lowest number of events detected by one of the detection elements.

14. Process according to any one of the claims 9 to 13, in which each set of detection elements includes a single detection element.

15. Device for sorting in real time of detection events signals from several semi-conductor detection elements including:
- means (110, 112) for measuring amplitude data and rise time data for each signal,
- means for acquiring data apt for recording during a calibration phase of a biparametric spectrum of amplitude and rise time data for at least one set of detection elements,
- means for determination of at least one correlation between the amplitude and rise time data for each set of detection elements,
- means for selection in the spectrum of a biparametric acceptance window corresponding to the aforesaid correlation,
- a memory (120) to memorise for each set of detection elements at least one pair of rise time and amplitude data ranges corresponding to the biparametric acceptance window, and
- means for sorting of events, the means of sorting being apt to compare for each set of detection elements, the amplitude and rise time data measured for each detection signal during an examination phase with the pairs of data ranges memorised, and to select the events for which the data correspond to the aforesaid pairs of memorised ranges.

16. Device according to claim 15, including at least one application specific integrated circuit board (110, 112) (ASIC) associated with a detection matrix (100) including the detection elements (102), and forming the means of measurement of the amplitude and rise time.

17. Device according to claim 15, in which the device includes a computer (114) including, in the form of a program, the means for acquisition, determination of a correlation, selection and sorting.

18. Device according to any one of the claims 15 to 17, also including means for adjusting the parametric window to obtain uniform detection efficiency of the selected events for each set of detectors.

19. Device according to any one of the claims 15 to 18, in which each set of detection elements includes a single detection element.

20. Gamma-camera equipped with a device according to claim 15.
